# FASCICULE DE BREVET EUROPEEN

(11) **EP 2 337 951 B1**
(45) Date de publication et mention de la délivrance du brevet: **02.04.2014**
(21) Numéro de dépôt: 09760192.6
(22) Date de dépôt: 22.10.2009
(51) Int. Cl.: F03D 3/06, F03D 7/06

(54) **ÉOLIENNE A AXE VERTICAL**
WINDTURBINE MIT VERTIKALER ACHSE
WIND TURBINE WITH VERTICAL AXIS

(30) Priorité: 24.10.2008 FR 0805931
(43) Date de publication de la demande: 29.06.2011
(73) Titulaire: Noveol, 86240 Fontaine Le Comte (FR)
(72) Inventeur: Petitgenet, MaximiliEn, 86000 Poitiers (FR); Rahmani, Abdennour, 86360 Chasseneuil du Poitou (FR)
(74) Mandataire: Verriest, Philippe
(86) Numéro de dépôt international: PCT/FR2009/052021
(87) Numéro de publication internationale: WO 2010/046601

(56) Documents cités:
- WO-A-02/093006
- DE-A1- 2 948 060
- DE-A1- 3 825 241
- DE-A1-102004 041 281
- US-A- 4 456 429

## Description

La présente invention concerne les éoliennes à axe vertical utilisées comme source d'énergie renouvelable et principalement à la production d'électricité en les couplant à une génératrice.

Contrairement aux éoliennes à axe horizontal, les éoliennes à axe vertical ne nécessitent pas d'un mécanisme d'orientation pour orienter le rotor dans la direction du vent, celui-ci agissant sur les pales quelque soit sa direction. De plus ce type d'éolienne est connu pour être plus silencieux qu'une éolienne à axe horizontal classique dans des environnements de vent très tourbillonnaires. Elles sont donc principalement mais non exclusivement destinées à être utilisées en milieu urbain.

Il est connu notamment du document WO 2005/010355 d'utiliser une éolienne à axe vertical qui comprend un arbre pouvant tourner autour d'un axe longitudinal et une pluralité de pales couplées à l'arbre, chacune des pales comprenant un corps allongé qui présente une extrémité supérieure et une extrémité inférieure. Ces deux extrémités sont décalées en rotation l'une par rapport à l'autre, autour de l'axe longitudinal, de sorte que chaque pale présente une forme hélicoïdale. La partie du corps allongée de chaque pale, vue perpendiculairement à l'axe longitudinal, est façonnée comme une aile comportant un bord d'attaque, un bord de fuite et une ligne de cambrure définie entre ceux-ci. L'aile ainsi formée est arquée de sorte que la ligne de cambrure suit une ligne de courbure constante présentant un rayon de courbure fini.

Le document DE 3825241 propose même plusieurs modèles d'éoliennes à axe vertical avec des pâles profilées dynamiques dont le profil peut changer pour s'adapter aux conditions de vent.

Le profil des pales ainsi que leur ligne de courbure constante aide également à réduire le bruit engendré lors de leur traversée par le vent et à améliorer l'efficacité de l'éolienne, particulièrement lorsqu'elle est appliquée à des modèles relativement compacts ce qui est désirable en milieu urbain.

Ces éoliennes, comme toutes les éoliennes à axe vertical sont indifférentes à la direction incidente du vent une fois qu'elles ont été démarrées, et présentent une configuration des pales qui permet de réduire les contraintes exercées sur les pales par la force centrifuge lors des rotations à vitesses élevées.

De plus, comme décrit dans le document DE 10 2004 041 281, un décalage en rotation des pales permet de conserver un couple relativement constant lors de la rotation de l'éolienne. En effet, au moins une portion de pale est traversée à chaque instant par un vent soufflant dans une même direction. Cette configuration facilite également le démarrage de l'éolienne car qu'elle que soit sa direction, le vent affecte une portion de pâle de l'une des pâles d'une éolienne à l'arrêt. Cependant, cette portion de pâle ne présente qu'une faible surface de prise au vent, ne permettant pas le démarrage de l'éolienne lors de faibles vent.

Il apparaît donc que l'action seule du vent ne permet pas de mettre en rotation une éolienne à pales allongées lorsque celle-ci est immobile. Pour démarrer ce type d'éolienne, la génératrice de l'éolienne doit donc être utilisée en tant que moteur, ce qui est contre productif.

La présente invention vise à remédier à cet inconvénient tout en conservant les avantages de la conception d'une éolienne à axe vertical.

A cet effet, la présente invention a pour objet une éolienne comportant au moins une première pale et une seconde pale mobiles autour d'un axe de rotation vertical, caractérisé en ce qu'au moins l'une des pales comporte une première portion située à distance de l'axe de rotation, qui s'étend selon une première direction principale présentant une composante verticale et dont une section transversale à cette première direction principale est allongée selon un axe formant un angle α aigu avec une tangente à un cercle centré sur l'axe de rotation, et au moins une seconde portion située entre la première portion et l'axe de rotation et dans le prolongement de la première portion, cette seconde portion s'étendant selon une seconde direction principale présentant une composante radiale et dont une section transversale à cette seconde direction principale est allongée selon un axe présentant une composante verticale de façon à offrir une prise au vent supérieure à celle de la première portion.

Cette disposition permet de faire démarrer l'éolienne seule, sans utiliser la génératrice même par de faibles vents, et donc de gagner en énergie. Cela permet également d'obtenir une plus grande stabilité lors de forts changements de vitesse de vent tout en limitant le bruit mécanique engendré par la rotation des pales et le bruit aérodynamique généré par le freinage du vent et son écoulement autour des pales. En effet, cette première portion fonctionne selon un principe dit « de portance », c'est-à-dire que la vitesse relative du vent sur le profil aérodynamique de la pale, résultante de la somme du vecteur vitesse du vent et du vecteur de vitesse tangentielle de la pale, permet de générer un couple. Cette première portion nécessite cependant que l'angle relatif du vent sur la pale soit inférieur à un angle dit « de décrochage ». Cela permet également, lorsque la vitesse du vent varie brutalement, de maintenir la rotation quoi qu'il arrive grâce à la seconde portion, qui fonctionne selon un principe dit « de traînée », c'est-à-dire que le souffle du vent, en frappant la surface de cette seconde portion, permet de générer un couple, quelle que soit sa vitesse. De plus, cette configuration présente le net avantage de ne pas rendre l'écoulement central turbulent, ce qui ferait perdre de l'énergie. En effet, c'est à l'endroit où les pales sont le plus éloignées de l'axe, typiquement à mi-hauteur, qu'elles exercent le plus grand couple sur celui-ci et qu'elles produisent le plus. Dans l'invention, les secondes portions se situent près de l'arbre, avantageusement dans le prolongement des premières portions et ne rentrent donc pas en conflit avec le centre. De plus, la variation de l'angle α, pouvant aller de - 45° à + 45°, peut servir à compenser un éventuel décrochage (plus de portance) de la pale lorsqu'elle se retrouve dans une certaine position par rapport au vent relatif. En effet, la vitesse du vent relatif est la résultante d'un vecteur vent soufflant dans une certaine direction à une certaine force et d'un vecteur vitesse tangentielle dû à la rotation des pales. Au cours d'une rotation complète de l'éolienne autour de son axe, la direction du vecteur vent n'est pas modifiée tandis que le vecteur vitesse tangentielle dû à la rotation de l'éolienne tourne avec le profil. Ceci a pour conséquence de faire évoluer l'angle d'attaque de la vitesse relative du vent sur la pale entre deux valeurs de signes opposés en passant par une valeur nulle lorsque la pale effectue un tour complet. En modifiant l'angle α on modifie l'angle d'attaque entre la direction du vecteur vitesse relative et la corde du profil dans un repère lié au profil. En modifiant cet angle α sur la hauteur de la pale on peut ainsi avancer ou retarder un éventuel décrochage de la pale lorsque la pale se retrouve dans une position où l'angle d'attaque devient trop important. Le moment de décrochage sera donc différent à chaque hauteur de pale, ce qui permet d'entretenir la rotation de l'éolienne.

Selon un mode de réalisation, les au moins deux pales sont reliées mécaniquement à au moins un arbre libre en rotation selon l'axe longitudinal.

Selon un autre mode de réalisation, la première portion possède un profil aérodynamique qui vu perpendiculairement à l'axe longitudinal comporte un bord d'attaque, un bord de fuite, une ligne de cambrure entre ceux-ci, et une corde de profil séparant le bord d'attaque et le bord de fuite, l'angle de calage α étant défini entre cette corde de profil et la tangente au cercle défini par la rotation du centre de gravité du profil.

Les pales placées dans l'écoulement d'air, subissent une force aérodynamique que l'on peut décomposer en deux composantes, la traînée dans le sens du vent relatif et la portance perpendiculaire au sens du vent relatif. La portance va donc exercer une force sur la première portion de chaque pale dans la direction perpendiculaire au vent relatif, c'est-à-dire en termes aérodynamiques vers l'extrados du profil porteur par opposition à l'intrados. Dans le cas d'un profil symétrique, un angle de calage nul sur une hauteur de même rayon confère une portance maximale à la pale et un couple maximal sur l'axe de rotation longitudinal, cependant cette efficacité peut varier selon la proximité de la pale par rapport à l'axe et la symétrie du profil. Dans le cas d'un profil dissymétrique, comme c'est le cas par exemple sur une aile d'avion, la portance peut être considérablement augmentée. Cette géométrie accélère la circulation de l'air sur l'extrados et crée une dépression atmosphérique à ce niveau, la pression sur l'intrados devient plus grande que sur l'extrados. Le résultat final est un couple plus élevé sur l'axe de rotation.

Selon le même mode de réalisation, l'angle α est fonction du rayon R pris entre la ligne de cambrure du profil et l'axe de rotation de l'éolienne.

Cela permet de retarder ou avancer le moment d'un éventuel décrochage en compensant une diminution de la force du vecteur vitesse tangentielle qui sera d'autant plus faible qu'il se rapproche de l'axe longitudinal, les pales tournant naturellement moins vite près du centre. Ceci permet également de concentrer la portance sur les portions des premières portions les plus éloignées de l'axe, là où le rendement est le plus efficace tout en minimisant les éventuelles turbulences susceptibles de s'appliquer aux autres portions des premières portions des pales se rapprochant du centre.

Selon un mode de réalisation, la première portion présente une portion dont le rayon est constant.

Cette configuration est celle qui offre le meilleur rendement à l'éolienne car elle tend à éloigner de l'axe la plus grande portion possible de la pale.

Avantageusement, la première portion rejoint l'au moins une seconde portion en se rapprochant de l'axe longitudinal jusqu'à une distance comprise entre 0,5 et 1 fois le rayon R constant pris sur la portion de la seconde portion.

Cet intervalle correspond à un compromis entre la facilité de lancement de l'éolienne (0,5 fois le rayon) et un meilleur rendement de l'éolienne une fois en rotation (1 fois le rayon).

Selon un autre mode de réalisation, la première portion présente une portion dont le rayon pris perpendiculairement entre l'axe longitudinal et la ligne de cambrure décrit une fonction parabolique.

Cette configuration, bien qu'apportant un rendement inférieur que dans le cas d'un rayon constant, reste néanmoins dans des valeurs de rendement tout à fait satisfaisantes et permet une mise en oeuvre simplifiée de l'éolienne.

Selon un mode de réalisation, la corde de profil de chacune des premières portions des pales varie le long de la hauteur de la première portion de chaque pale.

La cambrure et donc la portance sur la section de la première portion de la pale peuvent ainsi être adaptées suivant la hauteur de la pale.

Selon un mode de réalisation, chacune des pales comporte une extrémité supérieure et une extrémité inférieure décalées en rotation l'une par rapport à l'autre autour de l'axe longitudinal de sorte que chaque pale présente une courbure en troposkine.

Ce type de décalage assure la continuité de l'effet de portance le long d'une fraction de première portion de pale et évite donc une oscillation du couple avec une amplitude de crête à crête trop importante.

Selon un autre mode de réalisation, des rayons de renfort sont disposés entre l'au moins un arbre mobile et la première portion de chaque pale.

Cette disposition apporte de la rigidité au système et prévient une déformation ou rupture de pale dans des conditions de fort vent.

Suivant le mode de configuration à une ou deux secondes portions, ces rayons de renfort peuvent être fixés à mi hauteur ou à une hauteur limitant les contraintes mécaniques sur les pales. Leur fixation transversale limite les turbulences qu'ils pourraient engendrer.

Selon un autre mode de réalisation, la seconde portion des pales présente une surface concave.

Cette disposition permet au vent de s'engouffrer dans les pales, ce qui leur transmet très vite un couple élevé capable d'initier la rotation de l'éolienne.

Avantageusement, la seconde portion est fixée longitudinalement à l'au moins un arbre.

Cette configuration permet d'utiliser au mieux le vent se déplaçant transversalement à l'axe longitudinal de l'éolienne en maximisant le flux à travers la surface de la seconde portion des pales. Néanmoins, il reste tout à fait possible d'envisager une éolienne selon l'invention avec une seconde portion de pale maintenue à l'au moins un arbre à l'aide de bras fixe.

Selon un mode de réalisation, la fixation de la seconde portion à l'au moins un arbre est désaxée par rapport à l'axe longitudinal.

Ce désaxage permet d'initier la rotation de l'arbre d'une manière plus efficace que si la fixation avait été dans l'axe longitudinal.

Selon un autre mode de réalisation, l'écart angulaire pris transversalement à l'axe longitudinal entre les centres de gravité situés sur deux profils de pales adjacentes est identique.

Cela confère une symétrie de révolution à l'éolienne qui pour un flux d'air donné sera animée d'un mouvement de rotation dont l'oscillation du couple moteur est de faible amplitude et dont la fréquence augmentera en fonction du nombre de pales au point de paraître animée d'un mouvement quasi continu.

De toute façon, l'invention sera bien comprise à l'aide de la description qui suit, en référence aux dessins schématiques annexés représentant, à titre d'exemples non limitatifs, plusieurs formes d'exécution d'une éolienne à axe vertical selon l'invention.
La figure 1 est une vue de l'éolienne selon un premier mode de réalisation.
La figure 2 est une vue agrandie des secondes portions des pales selon le premier mode de réalisation.
La figure 3 est une vue de dessus de l'éolienne selon le premier mode de réalisation.
La figure 4 est une vue de l'éolienne selon un deuxième mode de réalisation.
La figure 5 est une vue de l'éolienne selon un troisième mode de réalisation.
La figure 6 est une coupe transversale d'une pale de l'éolienne sur sa première portion.

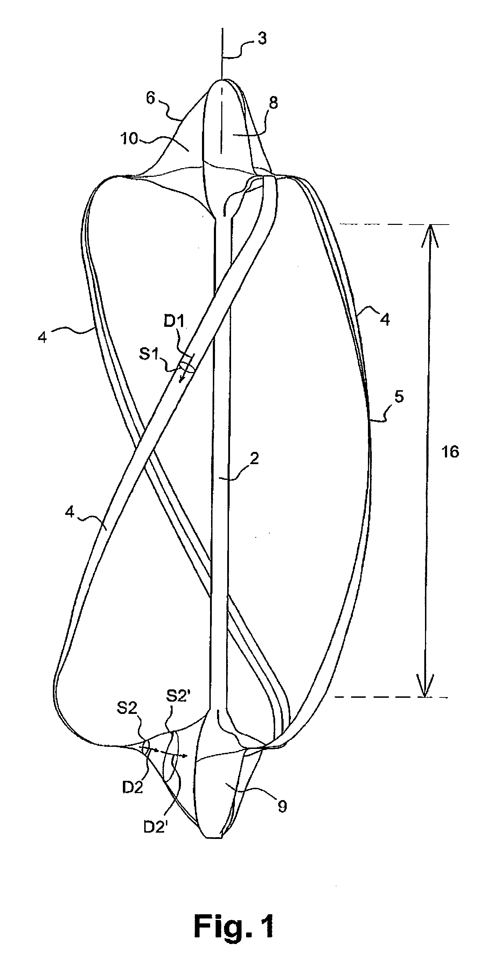

Selon l'invention, en référence aux figures 1, 4 et 5 une éolienne à axe vertical comprend un arbre mobile 2 en rotation autour d'un axe longitudinal 3 et des pales 4 couplées mécaniquement à l'arbre 2. Chacune des pales 4 comporte une première portion 5 et une ou deux seconde portions 6 prolongeant la première portion 5 et servant à la fixer mécaniquement à l'arbre 2.

Les premières portions 5 des pales sont également reliées directement à l'arbre 2 par des rayons 7. Ces rayons 7 sont disposés selon un plan horizontal afin de limiter les turbulences qu'ils pourraient engendrer au centre de l'éolienne 1. Il est bien entendu que ces rayons 7 peuvent se présenter selon une configuration et une géométrie différente, leur but étant essentiellement de réaliser un lien mécanique entre les pales 4 et l'arbre 2.

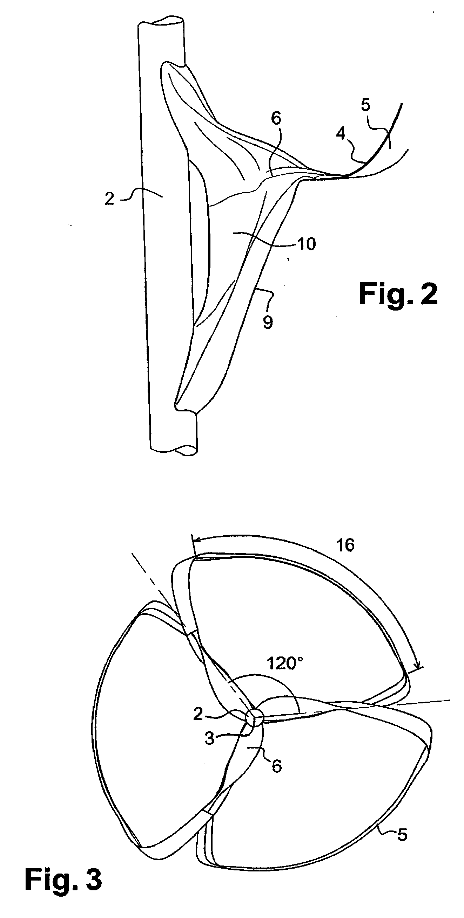

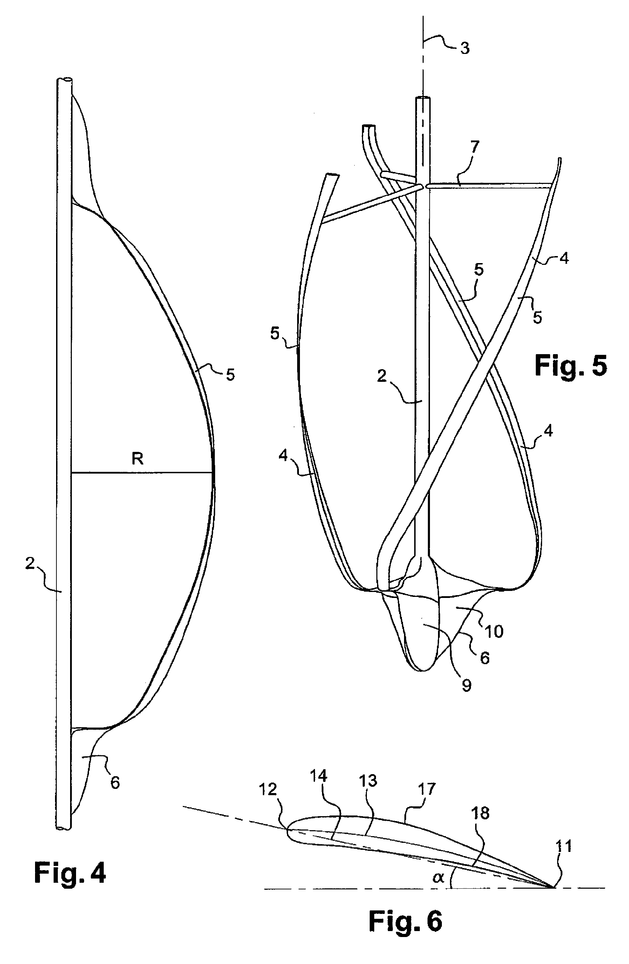

Chaque pale 4 comprend une extrémité haute 8 et une extrémité basse 9 décalées en rotation l'une par rapport à l'autre autour de l'axe longitudinal 3 conférant aux pales une géométrie hélicoïdale. Selon que le rayon de courbure est constant ou non, les pales 4 peuvent également présenter une courbure en troposkine, c'est notamment le cas dans le deuxième mode de réalisation présenté à la figure 4. Les pales 4 s'inscrivent dans un cercle de rayon R comme on peut également le voir sur la figure 4 et sur la figure 3 présentant une vue de dessus de l'éolienne selon le premier mode de réalisation.

Les secondes portions 6 des pales 4 sont fixées longitudinalement le long d'une portion de l'arbre 2 et présentent chacune une surface concave 10 toutes orientées dans le même sens. Leur fixation est légèrement excentrée de l'axe longitudinal 3.

Le profil de la première portion 5 de chaque pales 4 représenté pour une certaine hauteur de pale 4 à la figure 6 définie un bord d'attaque 12, un bord de fuite 11, une ligne de cambrure 13 entre ceux-ci, et une corde de profil 14. La surface extérieure de la pale, orientée dans le même sens que la cambrure est dite intrados 18 tandis que la surface intérieure de la pale est dite extrados 17. La corde de profil 14 relie par une droite les deux points d'intersection entre l'extrados 17 et l'intrados 18 séparés par la ligne de cambrure 13.

Un angle α est défini entre la corde de profil et une tangente A au cercle défini par la rotation du centre de gravité du profil de la première portion 5. Cet angle α, dit angle de calage, évolue en fonction du rayon R, c'est-à-dire de la distance entre le centre de gravité du profil et l'axe longitudinal 3 de rotation de l'éolienne 1.

Selon le premier mode de réalisation représenté à la figure 1, la première portion 5 comporte une portion 16 dont le rayon R pris perpendiculairement entre l'axe longitudinal 3 et le centre de gravité du profil est constant. L'angle α est donc lui aussi constant et de préférence nul. Dans ce même mode de réalisation, la première portion 5 rejoint la seconde portion 6 en se rapprochant de l'arbre 2 à une distance comprise entre 0,5 et 1 fois le rayon R constant pris sur la portion 16 de la première portion 5.

Selon le deuxième mode de réalisation représenté à la figure 4, la première portion 5 présente une portion 16 dont le rayon R pris perpendiculairement entre l'axe longitudinal 3 et le centre de gravité d'une fraction de la portion 16 décrit une fonction parabolique.

Selon le troisième mode de réalisation représenté à la figure 5, les pales de l'éolienne 1 ne comprennent qu'une seule seconde portion 6 sur l'extrémité basse 9 de la pale 4, les rayons 7 fixant l'extrémité haute 8 de chaque pale 4 à l'arbre 2.

Lors d'un flux d'air ou vent, l'éolienne 1 va initier un mouvement de rotation par l'action de ce flux d'air sur les secondes portions 6 des pales 4. Les secondes portions 6 étant légèrement désaxées par rapport à l'axe longitudinal 3, une même portion de seconde portion 6 se retrouve éloignée de l'axe longitudinal et le vent, même faible, qui s'engouffre à tour de rôle dans la surface concave 10 de chaque seconde portion 6 de pale 4 exerce un couple plus grand sur la pale 4 que dans le cas où les secondes portions 6 auraient été axées sur l'axe longitudinal 3.

Une fois que l'éolienne 1 est en rotation, les premières portions 5 des pales 4 deviennent fonctionnelles. L'angle α évoluant en fonction du rayon R, la portance devient quasi-maximale sur le profil de la pale 4 lorsque le vecteur vitesse tangentielle est orthogonal au vecteur de vitesse du vent.

On comprend donc que dans le cas du premier mode de réalisation avec un rayon R constant sur une portion 16 de la première portion 5 de la pale 4, la portance s'applique avec la même force sur toute fraction de la portion 16. Cette fraction se déplace continuellement le long de la portion 16 de la première portion 5. Ce déplacement est dû à l'évolution hélicoïdale des pales.

Dans le cas du deuxième mode de réalisation, le rayon R pris perpendiculairement entre l'axe longitudinal 3 et le centre de gravité d'une fraction de la portion 16 décrit une fonction parabolique. La portance s'applique sur une petite fraction qui se déplace le long de la première portion 5 de la pale 4 grâce à la courbure en troposkine des pales 4. En effet, tout comme le premier mode de réalisation, le vent relatif soufflera sur la première portion 5 de la pale 4 selon un angle d'attaque maximal sur au moins une petite fraction de la première portion 5 qui se déplacera continuellement le long de la première portion 5 jusqu'à son extrémité et à la reprise par la première portion 5 de la pale 4 suivante. Le décrochage peut être retardé en bout de la première portion 5 en corrigeant de quelques degrés la valeur de l'angle de calage α, en effet dans ce mode de réalisation la vitesse tangentielle du vent relatif diminue d'autant plus qu'il se rapproche de l'axe 3 diminuant par la même occasion l'effet de portance si celle-ci n'est pas corrigée dans une certaine limite par une variation de l'angle de calage α.

Dans le troisième mode de réalisation, le principe de fonctionnement des deux modes précédent peut être appliqué. Seule une seconde portion 6 a été retirée afin de conférer plus de légèreté à une éolienne 1 destinée à être installée dans des milieux où la vitesse du vent est suffisante pour initier la rotation de l'éolienne 1 à partir d'une seule seconde portion 6. On allège ainsi l'éolienne tout en réduisant son coût de fabrication.

Comme il va de soi, l'invention ne se limite pas aux seules formes d'exécution de cette éolienne, décrites ci-dessus à titre d'exemple, mais elle embrasse au contraire toutes les variantes comme par exemple des premières portions de pales ayant un profil différent de celui d'une aile d'avion, ou bien une largeur variable sur leur hauteur.

## Revendications

1. Eolienne (1) comportant :
Au moins une première pale (4) et une seconde pale (4) mobiles autour d'un axe vertical et longitudinal de rotation (3), **caractérisée en ce qu'**au moins l'une des pales (4) comporte :
- une première portion (5) située à distance de l'axe longitudinal de rotation (3), qui s'étend selon une première direction principale (D1) présentant une composante verticale et dont une section transversale à cette première direction principale est allongée selon un axe formant un angle (α) aigu avec une tangente à un cercle centré sur l'axe longitudinal de rotation (3), et
- au moins une seconde portion (6) située entre la première portion (5) et l'axe longitudinal de rotation (3) et dans le prolongement de la première portion (5), cette seconde portion (6) s'étendant selon une seconde direction principale (D2) présentant une composante radiale et dont une section transversale à cette seconde direction principale (D2) est allongée selon un axe présentant une composante verticale de façon à offrir une surface de prise au vent supérieure à celle de la première portion (5).

2. Eolienne (1) selon la revendication 1 dans laquelle les au moins deux pales (4) sont reliées mécaniquement à au moins un arbre (2) libre en rotation selon l'axe longitudinal de rotation (3).

3. Eolienne (1) selon la revendication 2 dans laquelle des rayons (7) de renfort sont disposés entre l'au moins un arbre (2) mobile et la première portion (5) de chaque pale (4).

4. Eolienne (1) selon l'une des revendications 2 à 3 dans laquelle la seconde portion (6) est fixée longitudinalement à l'au moins un arbre (2).

5. Eolienne (1) selon l'une des revendications 2 à 4 dans laquelle la fixation de la seconde portion (6) à l'au moins un arbre (2) est désaxée par rapport à l'axe longitudinal de rotation (3).

6. Eolienne (1) selon l'une des revendications précédentes dans laquelle, la première portion (5) possède un profil aérodynamique qui vu perpendiculairement à l'axe longitudinal de rotation (3) comporte un bord d'attaque (12), un bord de fuite (11), une ligne de cambrure (13) entre ceux-ci, une corde de profil (14) séparant le bord d'attaque (12) et le bord de fuite (11), l'angle de calage α étant défini entre cette corde de profil (14) et la tangente au cercle défini par la rotation du centre de gravité du profil.

7. Eolienne (1) selon la revendication 6 dans laquelle l'angle α est fonction du rayon R pris entre la ligne de cambrure (13) du profil et l'axe longitudinal de rotation (3) de l'éolienne (1).

8. Eolienne (1) selon la revendication 7 dans laquelle la première portion (5) présente une portion (16) dont le rayon R est constant.

9. Eolienne (1) selon la revendication 7 dans laquelle la première portion (5) présente un rayon qui pris perpendiculairement entre l'axe longitudinal (3) et la ligne de cambrure (13) décrit une fonction parabolique.

10. Eolienne (1) selon la revendication 8 dans laquelle la première portion (5) rejoint l'au moins une seconde portion (6) en se rapprochant de l'axe longitudinal de rotation (3) jusqu'à une distance comprise entre 0,5 et 1 fois le rayon R constant pris sur la portion (16) de la première portion (5).

11. Eolienne (1) selon l'une des revendications 6 à 10 dans laquelle la corde de profil (14) de chacune des premières portions (5) des pales (4) varie le long de la hauteur de la première portion (5) de chaque pale.

12. Eolienne (1) selon l'une des revendications précédentes dans laquelle chacune des pales (4) comporte une extrémité supérieure (8) et une extrémité inférieure (9) décalées en rotation l'une par rapport à l'autre autour de l'axe longitudinal de rotation (3) de sorte que chaque pale (4) présente une courbure en troposkine.

13. Eolienne (1) selon l'une des revendications précédentes dans laquelle la surface de prise au vent sur la ou les secondes portions (6) des pales (4) présente une surface concave (10).

14. Eolienne (1) selon l'une des revendications précédentes dans laquelle l'écart angulaire pris transversalement à l'axe longitudinal de rotation (3) entre les centres de gravité situés sur deux profils de pales (4) adjacentes est identique.

## Patentansprüche

1. Windkraftanlage (1), umfassend:
mindestens ein erstes Schaufelblatt (4) und ein zweites Schaufelblatt (4), die um eine vertikale und längs gerichtete Rotationsachse (3) beweglich sind, **dadurch gekennzeichnet, dass** mindestens eines der Schaufelblätter (4) Folgendes umfasst:
- einen ersten Abschnitt (5), der sich in einem Abstand von der längs gerichteten Rotationsachse (3) befindet, der sich in einer ersten Hauptrichtung (D1) erstreckt, die eine vertikale Komponente aufweist, und von der ein Querabschnitt zu dieser ersten Hauptrichtung entlang einer Achse verlängert ist, die einen spitzen Winkel (α) mit einer Tangente zu einem Kreis bildet, der auf der längs gerichteten Drehachse (3) zentriert ist; und
- mindestens einen zweiten Abschnitt (6), der sich zwischen dem ersten Abschnitt (5) und der längs gerichteten Rotationsachse (3) und in der Verlängerung des ersten Abschnitts (5) befindet, wobei sich dieser zweite Abschnitt (6) entlang einer zweiten Hauptrichtung (D2) erstreckt, die eine radiale Komponente aufweist, und von der ein Querabschnitt zu dieser ersten Hauptrichtung (D2) entlang einer Achse verlängert ist, die eine vertikale Komponente aufweist, um eine Fläche des Windwiderstands zu bieten, die größer als diejenige des ersten Abschnitts (5) ist.

2. Windkraftanlage (1) nach Anspruch 1, wobei die mindestens zwei Schaufelblätter (4) mechanisch mit mindestens einer Welle (2) in freier Rotation gemäß der längs gerichteten Rotationsachse (3) verbunden sind.

3. Windkraftanlage (1) nach Anspruch 2, wobei Verstärkungsradien (7) zwischen der mindestens einen beweglichen Welle (2) und dem ersten Abschnitt (5) jedes Schaufelblatts (4) angeordnet sind.

4. Windkraftanlage (1) nach einem der Ansprüche 2 bis 3, wobei der zweite Abschnitt (6) der Länge nach an der mindestens einen Welle (2) befestigt ist.

5. Windkraftanlage (1) nach einem der Ansprüche 2 bis 4, wobei die Befestigung des zweiten Abschnitts (6) an die mindestens eine Welle (2) mit Bezug auf die längs gerichtete Rotationsachse (3) außeraxial ist.

6. Windkraftanlage (1) nach einem der vorhergehenden Ansprüche, wobei der erste Abschnitt (5) ein aerodynamisches Profil aufweist, das, senkrecht zur längs gerichteten Rotationsachse (3) gesehen, eine Flügelvorderkante (12), eine Flügelhinterkante (11), eine Skelettlinie (13) zwischen diesen, eine Profilsehnenlänge (14), die die Flügelvorderkante (12) und die Flügelhinterkante (11) trennt, umfasst, wobei der Anstellwinkel α zwischen dieser Profilsehnenlänge (14) und der Tangente zum Kreis, definiert durch die Rotation des Schwerpunkts des Profils, definiert ist.

7. Windkraftanlage (1) nach Anspruch 6, wobei der Winkel α eine Funktion des Radius R ist, genommen zwischen der Skelettlinie (13) des Profils und der längs gerichteten Rotationsachse (3) der Windkraftanlage (1).

8. Windkraftanlage (1) nach Anspruch 7, wobei der erste Abschnitt (5) einen Abschnitt (16) darstellt, dessen Radius R konstant ist.

9. Windkraftanlage (1) nach Anspruch 7, wobei der erste Abschnitt (5) einen Radius aufweist, der, genommen senkrecht zwischen der längs gerichteten Achse (3) und der Skelettlinie (13), eine parabolische Funktion beschreibt.

10. Windkraftanlage (1) nach Anspruch 8, wobei sich der erste Abschnitt (5) mit dem mindestens einen zweiten Abschnitt (6) verbindet, indem er sich der längs gerichteten Rotationsachse (3) bis auf einen Abstand annähert, der zwischen 0,5 und 1 Mal dem konstanten Radius R, genommen auf dem Abschnitt (16) des ersten Abschnitts (5), liegt.

11. Windkraftanlage (1) nach einem der Ansprüche 6 bis 10, wobei die Profilsehnenlänge (14) jeder der ersten Abschnitte (5) der Schaufelblätter (4) entlang der Höhe des ersten Abschnitts (5) jedes Schaufelblatts variiert.

12. Windkraftanlage (1) nach einem der vorhergehenden Ansprüche, wobei jedes der Schaufelblätter (4) ein oberes Ende (8) und ein unteres Ende (9) umfasst, die in Rotation mit Bezug aufeinander um die längs gerichtete Rotationsachse (3) verschoben sind, so dass jedes Schaufelblatt (4) eine Darrieus-Krümmung aufweist.

13. Windkraftanlage (1) nach einem der vorhergehenden Ansprüche, wobei die Oberfläche des Windwiderstands auf dem oder den zweiten Abschnitten (6) der Schaufelblätter (4) eine konkave Oberfläche (10) darstellt.

14. Windkraftanlage (1) nach einem der vorhergehenden Ansprüche, wobei der Winkelabstand, genommen quer zur längs gerichteten Rotationsachse (3), zwischen den Schwerpunkten, die sich auf zwei benachbarten Schaufelblattprofilen (4) befinden, identisch ist.

## Claims

1. A wind turbine (1) including:
at least one first blade (4) and one second blade (4) movable around a vertical and longitudinal axis of rotation (3), **characterized in that** at least one of the blades (4) includes:
- a first portion (5) located remotely from the longitudinal axis of rotation (3), which extends according to a first main direction (D1) having a vertical component and a section of which, transverse to this first main direction, is elongated along an axis forming an acute angle (α) with a tangent to a circle centered on the longitudinal axis of rotation (3), and
- at least one second portion (6) located between the first portion (5) and the longitudinal axis of rotation (3) and in the extension of the first portion (5), this second portion (6) extending according to a second main direction (D2) having a radial component and a section of which, transverse to this second main direction (D2), is elongated along an axis having a vertical component so as to provide a wind resistance surface greater than that of the first portion (5).

2. The wind turbine (1) according to Claim 1 wherein the at least two blades (4) are mechanically connected to at least one shaft (2) rotating freely according to the longitudinal axis of rotation (3).

3. The wind turbine (1) according to Claim 2 wherein reinforcement spokes (7) are disposed between the at least one movable shaft (2) and the first portion (5) of each blade (4).

4. The wind turbine (1) according to any of Claims 2 to 3 wherein the second portion (6) is longitudinally fastened to the at least one shaft (2).

5. The wind turbine (1) according to any of Claims 2 to 4 wherein fastening of the second portion (6) to the at least one shaft (2) is offset relative to the longitudinal axis of rotation (3).

6. The wind turbine (1) according to any of the preceding claims wherein the first portion (5) has an aerodynamic profile which, viewed perpendicularly to the longitudinal axis of rotation (3), comprises a leading edge (12), a trailing edge (11), a camber line (13) between these edges, a profile chord (14) separating the leading edge (12) and the trailing edge (11), the setting angle α being defined between this profile chord (14) and the tangent to the circle defined by the rotation of the center of gravity of the profile.

7. The wind turbine (1) according to Claim 6 wherein the angle α depends on the radius R, taken between the camber line (13) of the profile and the longitudinal axis of rotation (3) of the wind turbine (1).

8. The wind turbine (1) according to Claim 7 wherein the first portion (5) has a portion (16) whereof the radius R is constant.

9. The wind turbine (1) according to Claim 7 wherein the first portion (5) has a radius which, taken perpendicularly between the longitudinal axis (3) and the camber line (13), describes a parabolic function.

10. The wind turbine (1) according to Claim 8 wherein the first portion (5) joins the at least one second portion (6) by getting closer to the longitudinal axis of rotation (3) up to a distance of between 0.5 and 1 times the constant radius R taken from the portion (16) of the first portion (5).

11. The wind turbine (1) according to any of Claims 6 to 10 wherein the profile chord (14) of each of the first portions (5) of the blades (4) varies along the height of the first portion (5) of each blade.

12. The wind turbine (1) according to any of the preceding claims wherein each of the blades (4) comprise an upper end (8) and a lower end (9) rotationally offset relative to each other around the longitudinal axis of rotation (3) so that each blade (4) has a troposkien-shaped curvature.

13. The wind turbine (1) according to any of the preceding claims wherein the wind resistance surface on the one or more second portions (6) of the blades (4) has a concave surface (10).

14. The wind turbine (1) according to any of the preceding claims wherein the angular deviation taken transversely to the longitudinal axis of rotation (3) between the centers of gravity located on two profiles of adjacent blades (4) is identical.
